# EUROPEAN PATENT APPLICATION

(11) **EP 1 958 741 A1**
(43) Date of publication of application: **20.08.2008**
(21) Application number: 08250463.0
(22) Date of filing: 07.02.2008
(51) Int. Cl.: B26D 7/01

(54) **Food slicing machines having moveable gates**

(30) Priority: 15.02.2007 GB 0702954
(71) Applicant: AEW Delford Systems Limited, Norwich NR7 9BB (GB)
(72) Inventor: Culling, Alan, Norwich Norfolk NR12 8AY (GB)
(74) Representative: Sharrock, Daniel John

(57) **Abstract**

A food slicing machine is described which has a slicing blade (15) for slicing a food product. A moveable gate (13) is positioned adjacent to the blade and moveable between an operative position in which the gate forms an abutment against which the food product is pressed prior to slicing, and an inoperative retracted position in which the food product can advance towards the blade for slicing. The gate undergoes a downwardly directed movement generally towards the blade when the gate moves from the operative position to the inoperative position so that the food product is advanced above the retracted gate towards the slicing blade.

## Description

### Field of the Invention

This invention relates to food slicing machines having moveable gates against which food products are pressed prior to slicing.

### Background to the Invention

A known food slicing machine has a slicing blade for slicing a food product and a moveable gate positioned adjacent the blade. A leading end of the food product is placed against the gate and the trailing end of the product is gripped by gripping apparatus having hooks which penetrate and grip the product and press the product into contact with the gate which then has to move out of the way to a retracted position to allow the food product to advance towards the blade for slicing. This requires the food product to move backwards and thus release pressure on the gate, after which the gate is then moved perpendicularly out of the way of the product. This action takes time and can loosen the grip imparted by the gripper apparatus on the food product.

### Summary of the Invention

According to the invention a food slicing machine has a slicing blade for slicing a food product, a moveable gate positioned adjacent the blade and moveable between an operative position in which the gate forms an abutment against which the food product is pressed prior to slicing and an inoperative retracted position in which the food product can advance towards the blade for slicing, wherein the gate undergoes a downwardly directed movement in a direction generally towards the blade when the gate moves from the operative position to the inoperative position so that in use the food product can be advanced above the retracted gate towards the slicing blade. Thus, in the invention the gate moves downwardly and generally towards the blade as it moves from its operative position to its inoperative position, avoiding the need for the food product to be retracted, thereby reducing the reload time of the machine and improving efficiency.

Preferably, the gate is mounted in the machine for pivotal movement about a substantially horizontal axis which may be orthogonal to the direction of advancement of the food product towards the slicing blade. The gate may occupy a vertical plane when in the operative position and a generally horizontal plane when in the retracted position, but if the bed of the slicing machine is inclined to the horizontal, the attitude of the gate will be similarly inclined with respect to the vertical and horizontal in the operative and inoperative positions respectively.

The gate may be in the form of a plate but in the preferred embodiment the gate takes the form of a plurality of spaced fingers inter-digitated with wheels of feed rollers which are rotatably driven in order to contribute to the advancing movement of the food product towards the slicing blade.

The gate may be attached to a linkage connected to an actuator, such as a piston/cylinder device, operative to move the gate between its operative and inoperative positions, the linkage occupying an in-line configuration when the gate is in the operative position in order to brace the gate in the operative position. The linkage may comprise a pivotally mounted crank connected to a link, the link being in line with one arm of the crank in the operative position of the gate, the other arm of the crank being connected to the piston/cylinder device.

### Brief Description of the Drawings

A food slicing machine according to the invention will now be described, by way of example, with reference to the accompanying drawings, in which:
Figure 1 is an isometric view of a feed mechanism with an integral gate shown in a closed operative position, for use in a food slicing machine according to the invention,
Figure 2 is a view corresponding to that of Figure 1, but with the gate in an open inoperative position,
Figures 3 to 7 show successive stages in the advancement of a food product in the slicing machine, and
Figures 8 and 9 are side views illustrating the gate linkage and pneumatic actuator, in operative and inoperative positions of the gate respectively.

### Detailed Description of the Drawings

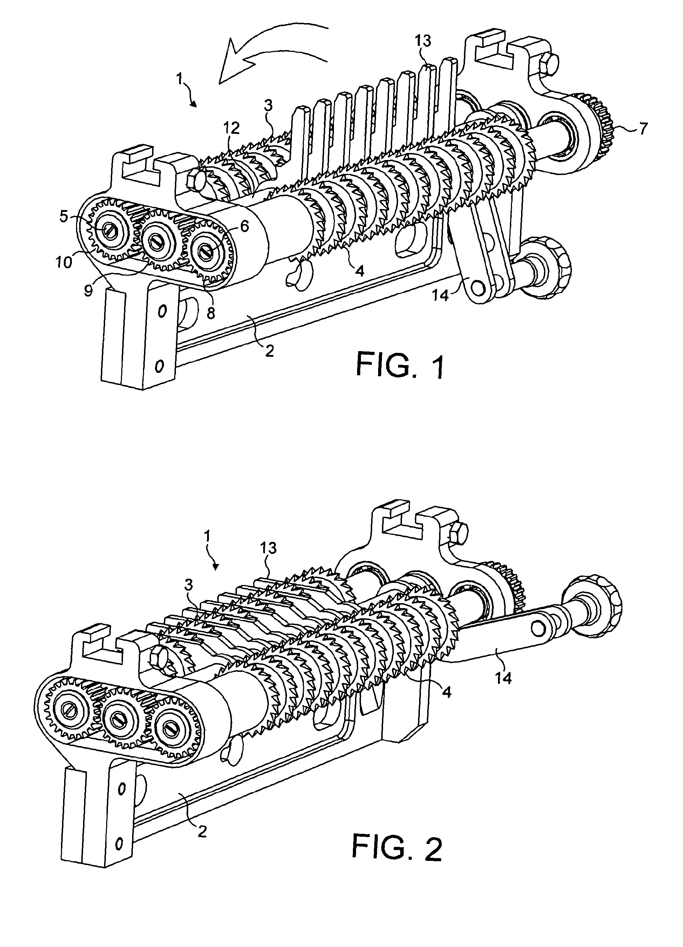

Referring to Figures 1 and 2, the feed mechanism 1 comprises a frame 2 by which the feed mechanism is mounted in a food slicing machine, such as a bacon slicing machine. Two parallel lines of toothed wheels 3, 4 are mounted on respective shafts 5, 6 rotatable in the frame about spaced horizontal axes. The toothed wheels 3, 4 are driven by a sprocket 7 mounted on the shaft 6, drive being transmitted to the other shaft 5 by means of three meshing sprockets 8, 9 and 10. Between the two shafts 5 and 6 is a third horizontal shaft 12 (also rotatably mounted in the frame 2) carrying a plurality of spaced fingers 13 which are positioned along the shaft 12 so that the fingers 13 are inter-digitated with the toothed wheels 3, 4.

An operating lever 14 is attached to the shaft 12 to move the fingers 13 between the operative position shown in Figure 1 and the inoperative position shown in Figure 2.

In the operative position of Figure 1, the fingers 13 project upwardly from between the two lines of toothed wheels 3, 4, the lever 14 being in the lowered position. When the lever 14 is raised (Figure 2) the shaft 12 is rotated about its horizontal axis and the fingers 13 move to the inoperative retracted position in which the fingers 13 are positioned in the spaces between adjacent wheels 3, 4.

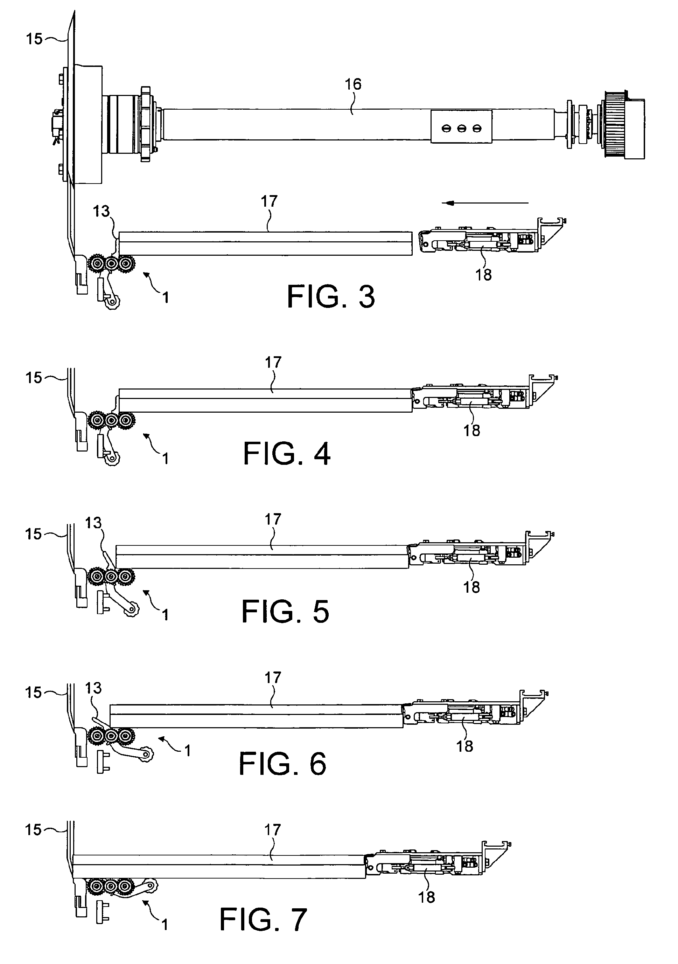

In Figure 3, the feed mechanism 1 is shown mounted in a food slicing machine having a rotatable slicing blade 15 driven by a drive shaft 16 below which is a support bed on which rests a food product 17, such as a log of bacon to be sliced. At the initial stage shown in Figure 3, the gate formed by the fingers 13 is in its raised operative position and a gripper apparatus 18 moves towards the trailing end of the food product which has been positioned on the bed of the machine. The gripper apparatus 18 contacts the trailing end of the food product 17 which is then gripped by hooks which penetrate the trailing end of the product to grip the latter. At this stage (Figure 4) the product 17 is pressed towards the fingers 13 but the gate formed by the fingers 13 acts as an abutment which restrains movement of the food product 17 and prevents the leading end reaching the blade 15.

Figures 5 and 6 illustrate two successive positions of the gate as it moves from its operative position towards its inoperative position, the food product 17 moving forwardly towards the blade 15. When the gate reaches its fully retracted position (Figure 7) the gripper apparatus 18 pushes the food product 17 into contact with the blade 15 and slicing commences. On completion of slicing, the gripper apparatus 18 retracts and the gate moves to its operative position, ready for loading of the next food product to be sliced.

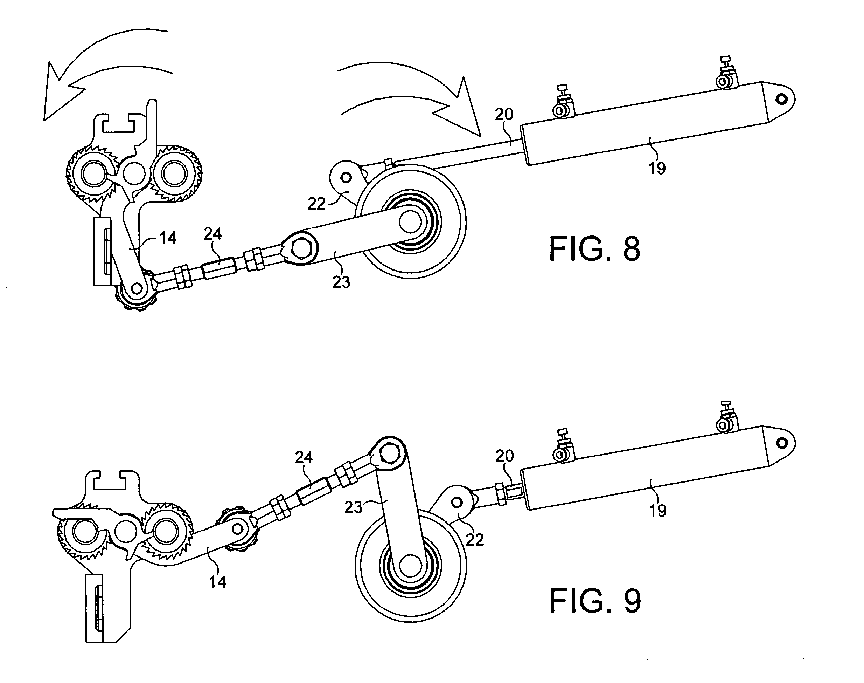

Referring to Figures 8 and 9, the gate is moved between its operative and inoperative positions by means of a double-acting pneumatic cylinder and piston device. The cylinder 19 is secured to the machine frame and the piston 20 is attached to one arm 22 of a pivotally mounted crank, the other arm 23 of which is attached to one end of a link 24, the other end of which is pivotally connected to the lever 14. In the operative position of the gate (Figure 8), the link 24 and the crank arm 23 are aligned so as to brace the gate against the considerable force exerted by the food product. By this means, the cylinder and piston device is isolated from the force exerted by the food product on the gate, enabling a lighter pneumatic piston and cylinder device to be used. Actuation of the cylinder and piston device rotates the crank and this moves the link 24 and the lever 14 to the position shown in Figure 9, thereby moving the fingers to their retracted positions lying between the toothed wheels.

Because the gate moves generally towards the slicing blade during its movement to its inoperative position, the food product does not need to be retracted. This reduces the reload time to about 3.5 seconds, in comparison with a typical reload time of 8 seconds in known machines using conventional gates. The gate and its associated linkage does not occupy any space above the food product, making access to the top of the food product easier, an advantage where the machine incorporates holding down apparatus for restraining the top of the product during slicing.

The gate is actively driven out of the way of the product by means of the piston and cylinder device at the appropriate time, rather than pushed over by the gripper pushing the product, to avoid the product riding up over the gate.

## Claims

1. A food slicing machine having a slicing blade for slicing a food product, a moveable gate positioned adjacent to the blade and moveable between an operative position in which the gate forms an abutment against which the food product is pressed prior to slicing and an inoperative retracted position in which the food product can advance towards the blade for slicing, wherein the gate undergoes a downwardly directed movement generally towards the blade when the gate moves from the operative position to the inoperative position so that in use the food product is advanced above the retracted gate towards the slicing blade.

2. A food slicing machine according to claim 1, wherein the gate is mounted in the machine for pivotal movement about a substantially horizontal axis.

3. A food slicing machine according to claim 2, wherein the horizontal axis is orthogonal to the direction of advancement of the food product towards the slicing blade.

4. A food slicing machine according to claim 3, wherein the gate occupies a vertical plane when in the operative position and a horizontal plane when in the retracted position.

5. A food slicing machine according to any of the preceding claims, wherein the gate is in the form of a plate.

6. A food slicing machine according to any of claims 1 to 4, wherein the gate is in the form of a plurality of spaced fingers inter-digitated with wheels of feed rollers.

7. A food slicing machine according to any of the preceding claims, wherein the gate is attached to a linkage connected to an actuator operative to move the gate between its operative and inoperative positions, the linkage occupying an in-line configuration when the gate is in the operative position in order to brace the gate in the operative position.

8. A food slicing machine according to claim 7, wherein the linkage comprises a pivotally mounted crank connected to a link, the link being in line with one arm of the crank in the operative position of the gate.
